# FASCICULE DE BREVET EUROPEEN

(11) **EP 4 002 018 B1**
(45) Date de publication et mention de la délivrance du brevet: **25.02.2026**
(21) Numéro de dépôt: 20207283.1
(22) Date de dépôt: 12.11.2020
(51) Int. Cl.: G04D 7/00, G04D 7/12, H04B 5/20, H04B 5/72, G04B 5/02

(54) **REMONTOIR INTELLIGENT DE MONTRE AUTOMATIQUE AVEC IDENTIFICATION DE MONTRE**
INTELLIGENTE AUFZIEHVORRICHTUNG EINER AUTOMATISCHEN ARMBANDUHR MIT ARMBANDUHRIDENTIFIKATION
SMART WATCH WINDER FOR AUTOMATIC WATCH WITH WATCH IDENTIFICATION

(43) Date de publication de la demande: 25.05.2022
(73) Titulaire: The Swatch Group Research and Development Ltd, 2074 Marin (CH)
(72) Inventeur: FAVRE, Jérôme, 2000 Neuchâtel (CH); IMBODEN, Matthias, 2072 St-Blaise (CH); CRISTONI, Romano, 2605 Sonceboz (CH); KALBERMATTER, Stefan, 2540 Grenchen (CH)
(74) Mandataire: ICB SA

(56) Documents cités:
- EP-A1- 3 096 191
- EP-A1- 3 339 984
- EP-A1- 3 982 209
- EP-A2- 3 422 119
- WO-A1-2012/126978
- DE-B3- 102009 034 109

## Description

### Domaine de l'invention

L'invention concerne un dispositif de remontoir pour montre automatique à masse oscillante mobile, comportant au moins un porte-montre agencé pour porter une montre automatique, et comportant des moyens de pilotage agencés pour piloter des moyens de motorisation pour l'entraînement dudit au moins un porte-montre pour procéder au remontage d'une dite montre, ledit dispositif comportant des moyens de mesure, interfacés avec lesdits moyens de pilotage, et qui sont agencés pour mesurer l'amplitude du résonateur d'une montre en fonction de l'armage effectué par lesdits moyens de motorisation.

L'invention concerne le domaine des dispositifs intelligents, tels que des remontoirs intelligents, pour le maintien de montres dans une aptitude immédiate au service, affichant l'heure juste, et avec une réserve de marche suffisante pour un porter de quelques heures, tout en évitant une usure prématurée de la montre par des remontages incessants autant qu'inutiles.

### Arrière-plan de l'invention

La plupart des remontoirs de montres du négoce ne contiennent pour ainsi dire aucune fonction intelligente et n'ont a priori que peu de raisons de reconnaitre la montre posée.

Dans les remontoirs intelligents récents, et notamment décrits dans les documents EP2650735, EP3163381, EP3339984, EP3572887, EP3719589, EP3835889, au nom de THE SWATCH GROUP RESEARCH & DEVELOPMENT Ltd, on stoppe le remontage des montres automatiques au plus tard lorsque la montre est complètement remontée, voire même un peu avant, afin d'éviter l'usure du tambour de barillet suite au frottement de la bride glissante. Ces dispositifs font l'objet d'améliorations constantes.

Le document EP 3 096 191 A1 décrit justement un dispositif de remontoir intelligent sur lequel peut être placée une montre automatique à masse oscillante notamment pour sa recharge. Ledit dispositif comprend également un lecteur de puce RFID portée par chaque montre avec un code unique et la mémorisation de données propres à ladite montre. Un échange de données de la montre peut être effectué avec le code unique lié aux données.

En particulier un des développements concerne un remontoir intelligent, basé sur la limitation du remontage inutile de montres automatiques, et qui a pour but principal la limitation de la recharge du barillet automatique de la montre au strict nécessaire, pour éviter toute usure prématurée de la montre, consécutive à des remontages excessifs.

Cette famille de remontoirs intelligents mesure la fréquence du balancier-spiral, ainsi que l'état d'armage du barillet, de manière à ne remonter la montre que la quantité nécessaire afin d'éviter l'usure prématurée du mouvement mécanique.

L'état d'armage du barillet est mesuré indirectement via une mesure de l'amplitude du balancier-spiral. Cette mesure d'amplitude n'est pas absolue, mais relative : on cherche surtout à déterminer si le remontage de la montre la réarme effectivement ou pas, si la montre est complètement armée ou non.

Pour identifier si une montre est complètement chargée, on mesure avantageusement l'amplitude du balancier-spiral par une méthode acoustique des bruits de l'échappement, effectuée par microphone de proximité ou de contact, car ces bruits permettent d'estimer l'amplitude du balancier-spiral, elle-même représentative de l'armage du barillet. Toutefois il reste difficile d'effectuer une mesure précise et fiable de l'amplitude, en raison du bruit de fond, à un coût raisonnable, et avec une faible consommation d'énergie. De plus, pour une précision optimale, cette méthode nécessite un contact avec la montre mesurée, ou au moins la mise en place d'un microphone aérien très proche du résonateur de la montre, dans un environnement peu bruyant.

La difficulté consiste à obtenir une valeur correcte de l'amplitude du balancier-spiral quelle que soit la montre et quel que soit le type d'échappement (ancre suisse, coaxial ou autre).

Ce problème est difficile à résoudre de manière parfaitement satisfaisante. Une bonne solution pratique consiste à mesurer la variation d'amplitude plutôt que sa valeur absolue. Lorsque la montre est complètement armée, l'amplitude cesse d'augmenter. Le remontoir asservit alors l'amplitude à une certaine fraction de l'amplitude maximum mesurée (par exemple 80%). Cette méthode nécessite d'attendre la stabilisation de l'amplitude à une valeur relativement élevée, ce qui est difficile à déceler, car la mesure d'amplitude est très bruitée. Cette durée d'attente peut être longue, et le remontoir peut remonter le barillet au point que la bride glisse, générant alors de l'usure. Une bonne méthode consiste à équiper le remontoir de moyens acoustiques agencés pour identifier un bruit de référence d'encliquetage entre la bride glissante du barillet et le relief de ce dernier. Il est également avantageux d'équiper le remontoir de moyens de mesure agencés pour mesurer la variation du couple résistant qui est opposé à ses moyens de motorisation. Ces différents agencements permettent de bien maîtriser le suivi de la variation d'amplitude.

Le fait que la valeur absolue de l'amplitude ne soit pas connue rend toutefois impossible une fonction utile : celle de signaler au Client que sa montre a une amplitude absolue faible, donc qu'elle présente de l'usure et aurait besoin d'un retour en service après-vente ou en usine.

En somme, pour une montre particulière, il est utile de pouvoir déterminer son amplitude nominale, soit en référence à des mesures effectuées à l'état neuf de la montre, soit en référence à des bases de données d'usine ou publiques.

### Résumé de l'invention

L'invention se propose de mettre au point des méthodes de reconnaissance d'une montre posée sur un remontoir intelligent, pour optimiser son fonctionnement, par l'accès, au travers de l'identification d'une montre particulière, à son historique propre ou à une base de données déterminant son amplitude nominale.

A cet effet, l'invention concerne un dispositif de remontoir pour montre automatique à masse oscillante mobile, selon la revendication 1.

L'invention concerne le domaine des remontoirs intelligents, pour le maintien de montres dans une aptitude immédiate au service, affichant l'heure juste, et avec une réserve de marche suffisante pour un porter de quelques heures, ou pour un réarmage accéléré d'une montre, dans le respect de l'intégrité de la montre et de sa préservation en termes d'usure.

### Description sommaire des dessins

D'autres caractéristiques et avantages de l'invention apparaîtront à la lecture de la description détaillée qui va suivre, en référence aux dessins annexés, où :

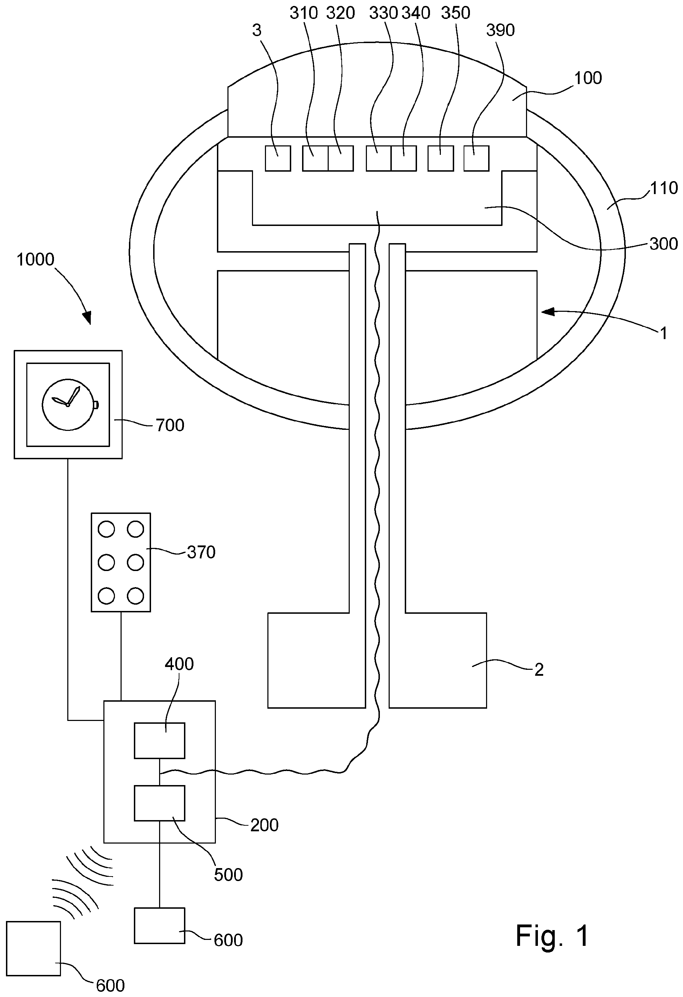

- la figure 1 représente, de façon schématisée, et partielle, aucun carénage n'étant représenté, un dispositif de remontoir selon l'invention, pour une montre automatique à masse oscillante mobile, fixée en appui sur un porte-montre motorisé ; ce dispositif comporte des moyens de pilotage, auxquels sont raccordés des moyens de motorisation pour l'entraînement de chaque porte-montre (un seul étant représenté sur cette figure), et pour le traitement des différents signaux vers et en provenance de moyens de mesure de l'amplitude du résonateur d'une montre, et de moyens d'identification de chaque montre, qui sont ici, dans une réalisation particulière non limitative, représentés embarqués sur le porte-montre comme les moyens de mesure ; ces moyens de pilotage comportent ici une base de données interne avec l'historique des mesures d'amplitude du résonateur de chaque montre particulière et/ou la valeur de son amplitude nominale, et aussi des moyens de communication communiquant avec une base de données externe, telle qu'une base de données constructeur ou similaire, et ils comportent encore des moyens d'interface et d'affichage au profit de l'utilisateur ;

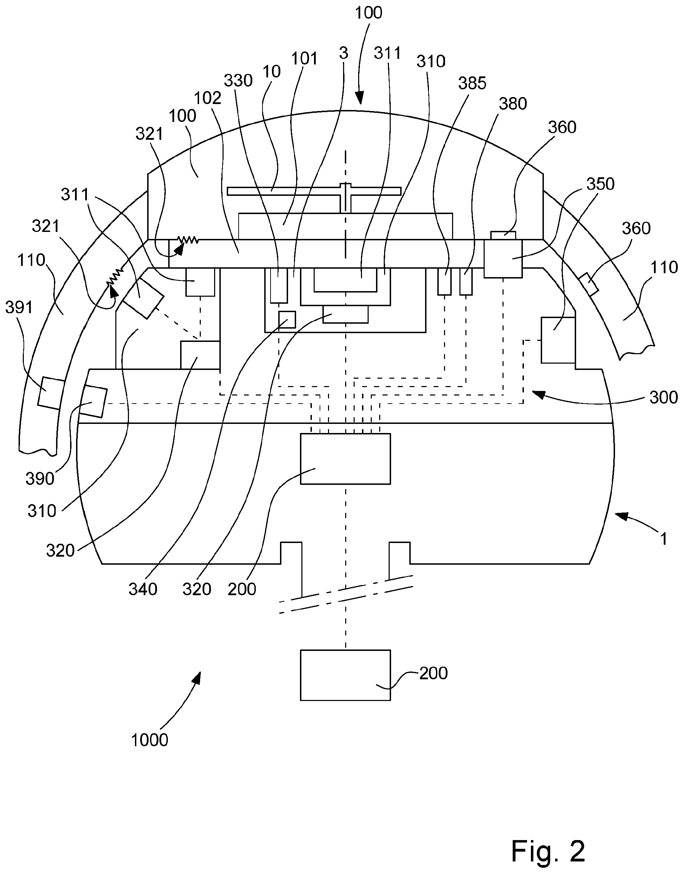

- la figure 2 représente, de façon schématisée, un détail de la figure 1, un exemple d'implantation des différents moyens d'acquisition dans le porte-montre, sous le fond de la montre, et agencés pour coopérer avec la montre ou avec son bracelet.

### Description détaillée des modes de réalisation préférés

L'invention concerne un dispositif de remontoir 1000 pour montre automatique 100 à masse oscillante mobile, comportant au moins un porte-montre 1 agencé pour porter au moins une telle montre automatique 100, et comportant des moyens de pilotage 200, qui sont agencés pour piloter des moyens de motorisation 2 pour l'entraînement du au moins un porte-montre 1 pour procéder au remontage d'une montre 100.

Ce dispositif 1000 comporte des moyens de mesure 3, qui sont interfacés avec les moyens de pilotage 200, et qui sont agencés pour mesurer l'amplitude du résonateur d'une montre 100 en fonction de l'armage effectué par les moyens de motorisation 2.

Selon l'invention, le dispositif de remontoir 1000 comporte des moyens d'identification 300 d'une montre 100, qui sont agencés pour fournir aux moyens de pilotage 200 l'identification d'une montre 100 particulière.

Dans la réalisation particulière illustrée, non limitative, aussi bien les moyens de mesure 3 que les moyens d'identification 300 sont représentés embarqués sur le porte-montre 1. Mais naturellement tout ou partie de ces différents moyens d'acquisition peut prendre place hors d'un porte-montre 1, et notamment dans un carter renfermant le dispositif de remontoir 1000 selon l'invention.

Et les moyens de pilotage 200 comportent :
- une base de données interne 400 avec l'historique des mesures d'amplitude du résonateur de la montre 100 particulière et/ou la valeur de son amplitude nominale; pour déterminer l'amplitude nominale de la montre 100 ou bien la plus ancienne valeur d'amplitude maximale de l'historique de la montre 100 si l'amplitude nominale est inconnue.

Plus particulièrement, les moyens de pilotage 200 sont agencés pour comparer, d'une part l'amplitude maximale mesurée par les moyens de mesure 3, et d'autre part l'amplitude nominale ou bien la plus ancienne valeur d'amplitude maximale de l'historique de la montre 100 si l'amplitude nominale est inconnue, pour déterminer l'usure de la montre 100.

Différentes variantes sont décrites ci-après, qui peuvent être combinées entre elles. Dans ces variantes, on cherche à identifier la montre 100 posée sur le remontoir, afin de consulter une base de données locale ou sur un serveur distant, afin de pouvoir reconnaître un fonctionnement anormal et la nécessité d'un retour en service après-vente.

Dans une première variante, les moyens d'identification 300 comportent des moyens optiques 310, qui sont combinés avec des moyens de reconnaissance de forme 320, lesquels sont agencés pour déchiffrer un marquage 321 de la montre 100 ou d'un bracelet 110 que comporte la montre 100, et/ou pour saisir le contour en projection plane de la montre 100. Ces moyens optiques 310 et ces moyens de reconnaissance de forme 320 sont interfacés avec la base de données interne 400, pour en extraire l'amplitude nominale du résonateur de la montre 100 correspondant au marquage 321 et/ou au contour en projection plane.

Plus particulièrement, le au moins un porte-montre 1 comporte un support transparent 102, sur lequel vient en appui le fond 101 de la montre 100, et sous lequel les moyens optiques 310 comportent au moins une caméra 311, qui est agencée pour saisir l'image du marquage 321 de la montre 100 ou du bracelet 110, et/ou du contour en projection plane de la montre 100.

Plus particulièrement, les moyens optiques 310 sont agencés pour suivre la masse oscillante 10 d'une montre 100 portant un fond 101 transparent, et une telle caméra 311 est utilisable pour suivre le mouvement de la masse oscillante 10, pour déterminer la position angulaire de cette masse oscillante 10 entre un angle mort correspondant à l'état désarmé de la montre 100 et un angle d'armage limite correspondant à l'état complètement armé de la montre 100, et les moyens optiques 310 sont agencés pour adresser un signal d'arrêt aux moyens de motorisation 2 quand cet angle d'armage limite est atteint.

Pour mettre en oeuvre cette première variante avec vision, il est possible de développer une application sur un appareil personnel de communication tel que téléphone portable, « smartphone », ou similaire, pour utiliser la caméra embarquée afin d'apprendre certaines caractéristiques propres à une montre 100. Il n'est pas indispensable d'en identifier le modèle exact, mais surtout de la reconnaître chaque fois qu'elle est mesurée. Il suffit ensuite d'observer l'évolution de la mesure d'amplitude associée à cette montre 100 au fil des années.

Quand le dispositif de remontoir 1000 comporte au moins une caméra 311, cette identification ne nécessite pas d'appareil personnel de communication et peut être réalisée directement sur le remontoir.

L'équipement avec des moyens de reconnaissance de forme 320, agencés pour déchiffrer un marquage 321 de la montre 100 ou de son bracelet 110, reste préférable pour distinguer deux montres du même modèle au sein d'un stock, ou d'une collection, sans intervention de l'utilisateur.

Dans une deuxième variante, les moyens d'identification 300 comportent des moyens acoustiques 330, qui sont combinés avec des moyens de traitement du signal 340 agencés pour relever la signature acoustique de la montre 100. Ces moyens acoustiques 330 et ces moyens de traitement du signal 340 sont interfacés avec la base de données interne 400 pour en extraire l'amplitude nominale du résonateur de la montre 100 correspondant à la signature acoustique. Chaque montre a une signature acoustique particulière. Il est toutefois nécessaire de disposer d'une haute sensibilité des moyens acoustiques 330 et ces moyens de traitement du signal 340 pour bien distinguer deux montres d'un même modèle. Il convient de noter que le positionnement de la montre 100 sur le porte-montre 1 influence aussi la signature acoustique. Cette méthode présente l'avantage de ne nécessiter aucun composant additionnel, et est totalement transparente pour l'utilisateur.

Dans une troisième variante, les moyens d'identification 300 comportent des moyens de communication en champ proche 350, qui sont agencés pour coopérer avec des moyens complémentaires de communication en champ proche 360 pour identifier la montre 100. Cette communication en champ proche, aussi appelée NFC (« near field communication », en anglais) peut, notamment, et facilement mettre en œuvre, différents tags NFC autocollants, fournis avec le remontoir et/ou avec les montres. Il suffit alors à l'utilisateur d'appliquer un tel autocollant, ou similaire, sur chaque montre 100, par exemple à l'arrière ou sur le bracelet 110. Dans une réalisation particulière, un tel tag NFC peut être installé en usine, collé, inséré, serti, tampographié, ou autre, et directement protégé par un élément protecteur tel que vernis, glace, ou autre, ne gênant pas l'épiderme de l'utilisateur. Le remontoir comporte alors une antenne NFC, qui permet d'identifier le tag et de l'associer à une montre 100. Cette méthode est à la fois très simple et très fiable. Cette troisième variante peut facilement être mise en œuvre au niveau du bracelet 110 de la montre 100, au lieu de la montre 100 elle-même.

Dans une quatrième variante, les moyens d'identification 300 et/ou les moyens de pilotage 200 comportent des moyens de communication avec l'utilisateur 370, pour l'identification de la montre 100 par l'utilisateur. L'entrée de données d'identification par l'utilisateur est une solution pragmatique: le remontoir peut simplement demander à l'utilisateur, par l'interface d'un écran, d'un clavier, d'un pupitre, ou d'un appareil personnel de communication, d'identifier lui-même la montre 100 mesurée. Celui-ci peut utiliser n'importe quel système de saisie, tel qu'un clavier, un pavé numérique, un écran tactile ou même la parole.

Dans une cinquième variante, les moyens d'identification 300 comportent des moyens de détermination de la masse 380 pour la détermination de la masse de la montre 100, par exemple comportant une jauge de contrainte embarquée sur le porte-montre 1 pour différencier des montres d'une collection, de modèle différents ou au moins comportant des bracelets 110 différents pour des montres de même modèle. Cette cinquième variante peut être mise en œuvre au niveau du bracelet 110 de la montre 100, au lieu de la montre 100 elle-même.

Dans une sixième variante, les moyens d'identification 300 comportent des moyens d'évaluation de la quantité de métal 385, pour évaluer la quantité de métal en présence sur le porte-montre 1, par exemple un détecteur de métal analogique embarqué sur le porte-montre 1, qui peut pourrait différencier les montres, ou plus particulièrement les montres équipées de leur bracelet 110, en mesurant la quantité de métal devant lui.

Dans une septième variante, les moyens d'identification 300 comportent des moyens de mesure de champ 390, qui sont agencés pour mesurer l'intensité et/ou l'orientation d'un champ généré par un générateur de champ 391, logé dans la montre 100 ou de préférence dans le bracelet 110. Ce champ peut être un champ électrostatique permanent, généré par des électrets noyés dans le bracelet 110, et/ou un champ magnétique permanent, généré par au moins un aimant logé dans le bracelet 110 ; les dimensions, l'aimantation, et l'orientation de chaque aimant, peuvent être différentes d'un bracelet à l'autre pour un même modèle de montre, ce qui permet de différencier facilement deux montres de même modèle équipées de bracelets de même forme.

Les moyens d'identification 300 sont avantageusement agencés pour déterminer la présence ou l'absence d'une montre 100 sur au moins un porte-montre 1, et plus particulièrement sur chaque porte-montre 1.

Plus particulièrement, la base de données interne 400 comporte l'amplitude nominale du résonateur de la montre 100, et/ou le nombre de tours d'armage maximal recommandé pour la montre 100.

De façon avantageuse, le dispositif de remontoir 1000 comporte encore des moyens d'affichage 700, agencés pour afficher au profit de l'utilisateur ou du public des informations relatives à au moins une montre 100 qu'il porte, et, plus particulièrement, à chaque montre qu'il porte, telle que le modèle de la montre, la date, l'évaluation de la marche, le taux d'armage, ou autre.

La reconnaissance de la montre 100 posée sur le remontoir a pour objectif principal de résoudre le problème de l'identification d'un vieillissement, et d'autres fonctionnalités se révèlent utiles. Par exemple, dans un remontoir classique (sans mesure d'amplitude), on peut programmer initialement le nombre de tours d'armage maximum pour chaque montre d'une collection ou d'un stock, puis reconnaître ensuite chacune d'elles avec une des méthodes ci-dessus. Ceci permet de limiter l'usure de montres nécessitant peu de tours d'armage, tout en empêchant que les grosses montres ne s'arrêtent sur le long terme. Une précaution utile est d'enregistrer, à l'entrée de chaque montre 100 dans une collection ou un stock, le nombre de tours d'armage constaté, et, quand on dispose avantageusement d'un remontoir avec mesure d'amplitude, d'enregistrer au même moment l'amplitude maximale mesurée.

## Revendications

1. Dispositif de remontoir (1000) pour montre automatique (100) à masse oscillante (10) mobile, comportant au moins un porte-montre (1) agencé pour porter au moins une dite montre automatique (100), et comportant des moyens de pilotage (200) agencés pour piloter des moyens de motorisation (2) pour l'entraînement dudit au moins un porte-montre (1) pour procéder au remontage d'une dite montre (100), ledit dispositif (1000) comportant des moyens de mesure (3), interfacés avec lesdits moyens de pilotage (200), et qui sont agencés pour mesurer l'amplitude du résonateur d'une montre (100) en fonction de l'armage effectué par lesdits moyens de motorisation (2), ledit dispositif de remontoir (1000) comportant des moyens d'identification (300) d'une dite montre (100), qui sont agencés pour fournir auxdits moyens de pilotage (200) l'identification d'une montre (100) particulière, **caractérisé en ce que** lesdits moyens de pilotage (200) comportent une base de données interne (400) avec l'historique des mesures d'amplitude du résonateur de ladite montre (100) particulière pour déterminer la plus ancienne valeur d'amplitude maximale de l'historique de ladite montre (100).

2. Dispositif de remontoir (1000) selon la revendication 1, **caractérisé en ce que** lesdits moyens de pilotage (200) sont agencés pour comparer, d'une part l'amplitude maximale mesurée par lesdits moyens de mesure (3), et d'autre part la plus ancienne valeur d'amplitude maximale de l'historique de ladite montre (100), pour déterminer l'usure de ladite montre (100).

3. Dispositif de remontoir (1000) selon la revendication 1 ou 2, **caractérisé en ce que** lesdits moyens d'identification (300) comportent des moyens optiques (310), combinés avec des moyens de reconnaissance de forme (320) agencés pour déchiffrer un marquage (321) de ladite montre (100) ou d'un bracelet (110) que comporte ladite montre (100), et/ou pour saisir le contour en projection plane de ladite montre (100), lesdits moyens optiques (310) et lesdits moyens de reconnaissance de forme (320) étant interfacés avec ladite base de données interne (400).

4. Dispositif de remontoir (1000) selon la revendication 3, **caractérisé en ce que** ledit au moins un dit porte-montre (1) comporte un support transparent (102) sur lequel vient en appui le fond (101) de ladite montre (100), et sous lequel lesdits moyens optiques (310) comportent au moins une caméra (311) agencée pour saisir l'image du marquage (321) de ladite montre (100) ou d'un bracelet (110) que comporte ladite montre (100), et/ou du contour en projection plane de ladite montre (100).

5. Dispositif de remontoir (1000) selon la revendication 4, caractérisé en ce lesdits moyens optiques (310) sont agencés pour suivre la masse oscillante (10) d'une dite montre (100) portant un fond (101) transparent, et pour déterminer la position angulaire de ladite masse oscillante (10) entre un angle mort correspondant à l'état désarmé de ladite montre (100) et un angle d'armage limite correspondant à l'état complètement armé de ladite montre (100), et en ce que lesdits moyens optiques (310) sont agencés pour adresser un signal d'arrêt auxdits moyens de motorisation (2) quand ledit angle d'armage limite est atteint.

6. Dispositif de remontoir (1000) selon l'une des revendications 1 à 5, **caractérisé en ce que** lesdits moyens d'identification (300) comportent des moyens acoustiques (330) combinés avec des moyens de traitement du signal (340) agencés pour relever la signature acoustique de ladite montre (100), lesdits moyens acoustiques (330) et lesdits moyens de traitement du signal (340) étant interfacés avec ladite base de données interne (400).

7. Dispositif de remontoir (1000) selon l'une des revendications 1 à 6, **caractérisé en ce que** lesdits moyens d'identification (300) comportent des moyens de communication en champ proche (350) agencés pour coopérer avec des moyens complémentaires de communication en champ proche (360) pour identifier ladite montre (100).

8. Dispositif de remontoir (1000) selon l'une des revendications 1 à 7, **caractérisé en ce que** lesdits moyens d'identification (300) et/ou lesdits moyens de pilotage (200) comportent des moyens de communication avec l'utilisateur (370) pour l'identification de ladite montre (100) par l'utilisateur.

9. Dispositif de remontoir (1000) selon l'une des revendications 1 à 8, **caractérisé en ce que** lesdits moyens d'identification (300) et/ou lesdits moyens de pilotage (200) comportent des moyens de mesure de champ (390), qui sont agencés pour mesurer l'intensité et/ou l'orientation d'un champ généré par un générateur de champ (391), logé dans une dite montre (100) ou dans un bracelet (110) que comporte une dite montre (100), lequel champ est un champ électrostatique permanent, généré par des électrets, ou un champ magnétique permanent, généré par au moins un aimant logé dans un dit bracelet (110).

10. Dispositif de remontoir (1000) selon l'une des revendications 1 à 9, **caractérisé en ce que** lesdits moyens d'identification (300) comportent des moyens de détermination de la masse (380) agencés pour la détermination de la masse de ladite montre (100).

11. Dispositif de remontoir (1000) selon l'une des revendications 1 à 10, **caractérisé en ce que** lesdits moyens d'identification (300) comportent des moyens d'évaluation de la quantité de métal (385), agencés pour évaluer la quantité de métal en présence sur ledit porte-montre (1).

12. Dispositif de remontoir (1000) selon l'une des revendications 1 à 11, **caractérisé en ce que** lesdits moyens d'identification (300) sont agencés pour déterminer la présence ou l'absence d'une montre (100) sur au moins un dit porte-montre (1).

13. Dispositif de remontoir (1000) selon l'une des revendications 1 à 12, **caractérisé en ce que** ladite base de données interne (400) comporte l'amplitude nominale du résonateur de ladite montre (100), et/ou le nombre de tours d'armage maximal recommandé pour ladite montre (100).

## Patentansprüche

1. Aufziehvorrichtung (1000) für eine automatische Uhr (100) mit beweglicher Schwingmasse (10), umfassend mindestens einen Uhrenhalter (1), der zum Tragen mindestens einer derartigen automatischen Uhr (100) eingerichtet ist, und umfassend Steuermittel (200), die dazu eingerichtet sind, Antriebsmittel (2) zur Bewegung des genannten mindestens einen Uhrenhalters (1) anzusteuern, um das Aufziehen einer derartigen Uhr (100) durchzuführen, wobei die Aufziehvorrichtung (1000) Messmittel (3) aufweist, die mit den genannten Steuermitteln (200) gekoppelt sind und dazu eingerichtet sind, die Amplitude des Resonators einer Uhr (100) in Abhängigkeit von dem durch die genannten Antriebsmittel (2) bewirkten Aufzug zu messen, und wobei die Aufziehvorrichtung (1000) ferner Identifikationsmittel (300) einer derartigen Uhr (100) aufweist, die dazu eingerichtet sind, den genannten Steuermitteln (200) die Identifikation einer bestimmten Uhr (100) bereitzustellen, **dadurch gekennzeichnet, dass** die genannten Steuermittel (200) eine interne Datenbank (400) mit der Historie der Amplitudenmessungen des Resonators der genannten bestimmten Uhr (100) umfassen, um den ältesten maximalen Amplitudenwert aus der Historie der genannten Uhr (100) zu bestimmen.

2. Aufziehvorrichtung (1000) nach Anspruch 1, **dadurch gekennzeichnet, dass** die genannten Steuermittel (200) dazu eingerichtet sind, einerseits die von den genannten Messmitteln (3) gemessene maximale Amplitude und andererseits den ältesten maximalen Amplitudenwert aus der Historie der genannten Uhr (100) miteinander zu vergleichen, um den Verschleiß der genannten Uhr (100) zu bestimmen.

3. Aufziehvorrichtung (1000) nach Anspruch 1 oder 2, **dadurch gekennzeichnet, dass** die genannten Identifikationsmittel (300) optische Mittel (310) umfassen, die mit Formerkennungsmitteln (320) kombiniert sind, welche dazu eingerichtet sind, eine Markierung (321) der genannten Uhr (100) oder eines Uhrenarmbands (110), das die genannte Uhr (100) aufweist, zu entschlüsseln und/oder die Kontur der genannten Uhr (100) in der Ebenenprojektion zu erfassen, wobei die genannten optischen Mittel (310) und die genannten Formerkennungsmittel (320) mit der genannten internen Datenbank (400) gekoppelt sind.

4. Aufziehvorrichtung (1000) nach Anspruch 3, **dadurch gekennzeichnet, dass** der genannte mindestens eine Uhrenhalter (1) eine transparente Auflage (102) umfasst, an welcher der Boden (101) der genannten Uhr (100) anliegt, und unterhalb welcher die genannten optischen Mittel (310) mindestens eine Kamera (311) umfassen, die dazu eingerichtet ist, ein Bild der Markierung (321) der genannten Uhr (100) oder eines Uhrenarmbands (110), das die genannte Uhr (100) aufweist, und/oder der Kontur der genannten Uhr (100) in der Ebenenprojektion zu erfassen.

5. Aufziehvorrichtung (1000) nach Anspruch 4, **dadurch gekennzeichnet, dass** die genannten optischen Mittel (310) dazu eingerichtet sind, die Schwingmasse (10) einer derartigen Uhr (100) mit transparentem Boden (101) zu verfolgen und die Winkelposition der genannten Schwingmasse (10) zwischen einem Totwinkel, der dem entspannten Zustand der genannten Uhr (100) entspricht, und einem Grenzaufzugswinkel, der dem vollständig aufgezogenen Zustand der genannten Uhr (100) entspricht, zu bestimmen, und dass die genannten optischen Mittel (310) ferner dazu eingerichtet sind, den genannten Antriebsmitteln (2) ein Stoppsignal zu übermitteln, wenn der genannte Grenzaufzugswinkel erreicht ist.

6. Aufziehvorrichtung (1000) nach einem der Ansprüche 1 bis 5, **dadurch gekennzeichnet, dass** die genannten Identifikationsmittel (300) akustische Mittel (330) umfassen, die mit Signalverarbeitungsmitteln (340) kombiniert sind, welche dazu eingerichtet sind, die akustische Signatur der genannten Uhr (100) zu erfassen, wobei die genannten akustischen Mittel (330) und die genannten Signalverarbeitungsmittel (340) mit der genannten internen Datenbank (400) gekoppelt sind.

7. Aufziehvorrichtung (1000) nach einem der Ansprüche 1 bis 6, **dadurch gekennzeichnet, dass** die genannten Identifikationsmittel (300) Nahfeld-Kommunikationsmittel (350) umfassen, die dazu eingerichtet sind, mit komplementären Nahfeld-Kommunikationsmitteln (360) zusammenzuwirken, um die genannte Uhr (100) zu identifizieren.

8. Aufziehvorrichtung (1000) nach einem der Ansprüche 1 bis 7, **dadurch gekennzeichnet, dass** die genannten Identifikationsmittel (300) und/oder die genannten Steuermittel (200) Kommunikationsmittel mit dem Benutzer (370) umfassen, um die Identifikation der genannten Uhr (100) durch den Benutzer zu ermöglichen.

9. Aufziehvorrichtung (1000) nach einem der Ansprüche 1 bis 8, **dadurch gekennzeichnet, dass** die genannten Identifikationsmittel (300) und/oder die genannten Steuermittel (200) Feldmessmittel (390) umfassen, die dazu eingerichtet sind, die Intensität und/oder die Orientierung eines von einem Feldgenerator (391) erzeugten Feldes zu messen, der in einer derartigen Uhr (100) oder in einem Uhrenarmband (110), das eine derartige Uhr (100) aufweist, angeordnet ist, wobei das Feld ein permanentes elektrostatisches Feld ist, das durch Elektrete erzeugt wird, oder ein permanentes Magnetfeld ist, das durch mindestens einen Magneten erzeugt wird, der in einem derartigen Uhrenarmband (110) angeordnet ist.

10. Aufziehvorrichtung (1000) nach einem der Ansprüche 1 bis 9, **dadurch gekennzeichnet, dass** die genannten Identifikationsmittel (300) Mittel zur Massenbestimmung (380) umfassen, die dazu eingerichtet sind, die Masse der genannten Uhr (100) zu bestimmen.

11. Aufziehvorrichtung (1000) nach einem der Ansprüche 1 bis 10, **dadurch gekennzeichnet, dass** die genannten Identifikationsmittel (300) Mittel zur Bewertung der Metallmenge (385) umfassen, die dazu eingerichtet sind, die auf dem genannten Uhrenhalter (1) vorhandene Metallmenge zu bewerten.

12. Aufziehvorrichtung (1000) nach einem der Ansprüche 1 bis 11, **dadurch gekennzeichnet, dass** die genannten Identifikationsmittel (300) dazu eingerichtet sind, das Vorhandensein oder das Nichtvorhandensein einer Uhr (100) auf mindestens einem der genannten Uhrenhalter (1) zu bestimmen.

13. Aufziehvorrichtung (1000) nach einem der Ansprüche 1 bis 12, **dadurch gekennzeichnet, dass** die genannte interne Datenbank (400) die Nennamplitude des Resonators der genannten Uhr (100) und/oder die empfohlene maximale Anzahl von Aufzugsumdrehungen für die genannte Uhr (100) umfasst.

## Claims

1. A winding device (1000) for an automatic watch (100) with a movable oscillating mass (10), including at least one watch holder (1) arranged to carry at least one said automatic watch (100), and including control means (200) arranged to control motorisation means (2) for driving said at least one watch holder (1) for winding a said watch (100), said device (1000) including measuring means (3), interfaced with said control means (200), and which are arranged to measure the amplitude of the resonator of a watch (100) based on the coiling performed by said motorisation means (2), said winding device (1000) including means (300) for identifying a said watch (100), which are arranged to provide said control means (200) with the identification of a particular watch (100), **characterised in that** said control means (200) include an internal database (400) with the history of the amplitude measurements of the resonator of said particular watch (100), to determine the oldest maximum amplitude value in the history of said watch (100).

2. The winding device (1000) according to claim 1, **characterised in that** said control means (200) are arranged to compare, on the one hand the maximum amplitude measured by said measuring means (3), and on the other hand the oldest maximum amplitude value in the history of said watch (100), to determine the wear of said watch (100).

3. The winding device (1000) according to claim 1 or 2, **characterised in that** said identification means (300) include optical means (310), combined with shape recognition means (320) arranged to decipher a marking (321) of said watch (100) or of a bracelet (110) included in said watch (100), and/or to capture the contour in planar projection of said watch (100), said optical means (310) and said shape recognition means (320) being interfaced with said internal database (400).

4. The winding device (1000) according to claim 3, **characterised in that** said at least one said watch holder (1) includes a transparent support (102) on which bears the back (101) of said watch (100), and under which said optical means (310) include at least one camera (311) arranged to capture the image of the marking (321) of said watch (100) or of a bracelet (110) included in said watch (100), and/or the contour in planar projection of said watch (100).

5. The winding device (1000) according to claim 4, **characterised in that** said optical means (310) are arranged to follow the oscillating mass (10) of a said watch (100) carrying a transparent back (101), and to determine the angular position of said oscillating mass (10) between a dead angle corresponding to the uncoiled state of said watch (100) and a limit coiling angle corresponding to the fully coiled state of said watch (100), and **in that** said optical means (310) are arranged to send a stop signal to said motorisation means (2) when said limit coiling angle is reached.

6. The winding device (1000) according to one of claims 1 to 5, **characterised in that** said identification means (300) include acoustic means (330) combined with signal processing means (340) arranged to record the acoustic signature of said watch (100), said acoustic means (330) and said signal processing means (340) being interfaced with said internal database (400).

7. The winding device (1000) according to one of claims 1 to 6, **characterised in that** said identification means (300) include near-field communication means (350) arranged to cooperate with complementary near-field communication means (360) to identify said watch (100).

8. The winding device (1000) according to one of claims 1 to 7, **characterised in that** said identification means (300) and/or said control means (200) include means for communication with the user (370) for the identification of said watch (100) by the user.

9. The winding device (1000) according to one of claims 1 to 8, **characterised in that** said identification means (300) and/or said control means (200) include field measuring means (390), which are arranged to measure the intensity and/or the orientation of a field generated by a field generator (391), housed in a said watch (100) or in a bracelet (110) included in a said watch (100), which field is a permanent electrostatic field, generated by electrets, or a permanent magnetic field, generated by at least one magnet housed in a said bracelet (110).

10. The winding device (1000) according to one of claims 1 to 9, **characterised in that** said identification means (300) include means for determining the mass (380) arranged for determining the mass of said watch (100).

11. The winding device (1000) according to one of claims 1 to 10, **characterised in that** said identification means (300) include means for evaluating the amount of metal (385), arranged to evaluate the amount of metal present on said watch holder (1).

12. The winding device (1000) according to one of claims 1 to 11, **characterised in that** said identification means (300) are arranged to determine the presence or absence of a watch (100) on at least one said watch holder (1).

13. The winding device (1000) according to one of claims 1 to 12, **characterised in that** said internal database (400) includes the nominal amplitude of the resonator of said watch (100), and/or the maximum number of coiling turns recommended for said watch (100).
